# EUROPEAN PATENT APPLICATION

(11) **EP 4 737 312 A1**
(43) Date of publication of application: **06.05.2026**
(21) Application number: 25184797.6
(22) Date of filing: 24.06.2025
(51) Int. Cl.: B64C 27/00, B64C 27/06, B64D 45/00

(54) **A CUTTING MECHANISM**

(30) Priority: 04.11.2024 TR 2024015116
(71) Applicant: Tusas- Turk Havacilik Ve Uzay Sanayii Anonim Sirketi, 06980 Ankara (TR)
(72) Inventor: SATIR, SEYFI MERT, 06980 ANKARA (TR)
(74) Representative: Berkkam, Ayfer

(57) **Abstract**

This invention relates to a body (2) which is an aircraft, at least one blade (3) located on the body (2), which allows the air flow to be controlled for moving the body (2), at least one control rod (4) in the body (2), which allows the user to generate a cyclic motion input, thereby controlling the movement of the blade (3), at least one cutter (5) located on the body (2), which cuts a cable (K) in contact with the body (2) during movement of the body (2), preventing damage to the body (2) and/or the blades (3), at least one first apparatus (6) located on the body (2) and including a cutter (5), which guides the cable (K) towards the cutter (5), at least one second apparatus (7) located on the first apparatus (6) so as to almost completely surround the first apparatus (6), extending outwardly from the body (2) so as to guide the cable (K) to the first apparatus (6) for cutting the cable (K), thereby allowing the cable (K) to be cut by the cutter (5).

## Description

The present invention relates to a cable cutter mechanism with an adjustable range of action in aircraft.

A cable cutter in helicopters is a safety device designed to be used in emergency situations. It is activated when obstacles such as electrical wires or cables are encountered that could pose a danger to the helicopter's rotors or other critical parts. If the helicopter becomes entangled in a cable, the device quickly activates to safely cut off the threat without damaging the rotor. It usually works with a hydraulic or mechanical system. The cable cutter maintains the helicopter's maneuverability by cutting the cables quickly and effectively. It is important from a safety point of view for pilots and flight crews, as the presence of a cable cutter increases the chances of the helicopter landing safely. These devices play a critical role in improving the safety of helicopters and preventing potential accidents.

In the UK patent document numbered GB2514090, which is included in the state of the art, the cable cutter mechanism in aircraft is mentioned. The document describes a cable cutter that is mounted on the aircraft and also functions as an antenna. The device consists of an electrically conductive main body and an auxiliary part connected to this body but electrically isolated. The main body and the auxiliary part are designed to form a VHF/UHF dipole communication antenna. In addition, the ends of a coaxial antenna connector are connected to the main body and the auxiliary part. The device also includes blades for cable cutting. This device has both a cable cutting function and acts as an antenna to provide communication on board the aircraft.

By means of a cutting mechanism developed with this invention, the field of action of the cutter can be changed to provide a cutting mechanism that can be adjusted depending on the position of the cable.

Another object of the present invention is to provide a cable cutter that can be adjusted depending on the change of the pal angle.

The cutting mechanism defined in the first claim and the claims dependent thereon, which are realized in order to achieve the object of the invention, the body, which is the main structure of the aircraft, has at least one blade that directs the air flow to ensure the movement of the body.

This blade plays a critical role in guiding and moving the airframe. The user controls the movement of the blade through a control rod located inside the body. This control rod allows the user to change the position of the blade by inputting cyclic motion. A cutter on the body protects both the body and the blade by cutting a cable (K) that comes into contact with the body during movement. This cutter increases safety by preventing damage to the cable in the event of a potential hazard. In the operation of the cutter mechanism, there is a first apparatus for guiding the cable into the cutter. This first apparatus helps to guide the cable (K) correctly while housing the cutter. Surrounding and connected to the first apparatus is a second apparatus designed to allow the cable (K) to be cut. The second apparatus forms the structure necessary for the cable to be guided and reach the cutter. This mechanism aims to protect the safety of both the vehicle and the users by ensuring that the cable is cut safely in case of any problems during the movement of the aircraft.

The inventive cutting mechanism comprises a second apparatus as a structure moving on the first apparatus, and at least one movement mechanism is used to provide this movement. This movement mechanism works by sliding the second apparatus along a certain path on the first apparatus. When the user triggers the control rod, this movement occurs almost simultaneously. The movement of the control rod provides the signal to change the position of the second apparatus. Thus, the area of influence of the cutter automatically changes according to the pal angle predetermined by the user. This makes the effect of the cutter more effective and ensures that the cable (K) is cut accurately during the movement of the aircraft. This mechanism makes it possible to integrate user input into the cutter mechanism. The user-specified pal angle determines when and how the cutter will act, increasing safety and improving system operation. Thus, a dynamic control is provided to minimize the hazards that may occur while the aircraft is in motion.

In one embodiment of the invention, the cutting mechanism comprises the second apparatus in a closed position (I), which is at least partially contained within the housing, while the second apparatus is fixedly disposed on the first apparatus. In this position, the second apparatus is immobile and does not perform its cutting function. However, depending on the pal angle, the second apparatus is moved to enable the cutter to cut the cable (K) in contact with the housing. When the user triggers the control rod, the actuator is activated. Under the action of the actuator, the second apparatus moves from the closed position (I) to the open position (II). In the open position (II), the second apparatus extends outwards from the body and thus guides the cable (K) to the cutter. In this way, the necessary environment for cutting the cable (K) is prepared. The cutter mechanism optimizes the effect of the cutter depending on the user-specified pal angle. The user's control input directly affects the effectiveness of the cutter mechanism. By moving the second apparatus in this way, a measure is taken to increase the safety of the aircraft. Thus, in case of any danger, the cable (K) can be cut safely, protecting the aircraft and the users.

In one embodiment of the invention, the cutting mechanism comprises a control rod for moving the blades and a first rod which moves when the control rod is triggered by a pilot. The second rod, which is moved by the movement of the first rod, enables the second apparatus to change position. The second rods are triggered and move forward or backward on their own axis.

In one embodiment of the invention, the cutting mechanism comprises an intermediate member capable of rotational movement due to the forward movement of the second rod. The intermediate member is located between the fastener and the second rod.

In one embodiment of the invention, the cutting mechanism comprises a connecting member connected at one end to the intermediate member and at the other end to the actuator. The cyclically moving intermediate element activates the actuator when the fastener connected to the actuator turns the screw on the actuator.

In one embodiment of the invention, the cutting mechanism comprises a transmission element, one end of which is connected to the actuator by means of gears, the other end being positioned to be connected to the transmission element. From the rotational movement in the actuator, the required displacement rate is transmitted to the second apparatus after the movement is transferred to the gears on the transmission element.

In one embodiment of the invention, the cutting mechanism comprises a rod for moving the second apparatus on the first apparatus by triggering the transmission element. The rod helps to cut the cable by pushing the second apparatus forward.

In one embodiment of the invention, the cutting mechanism comprises a recess on the second apparatus which allows the second apparatus to slide in an upward direction when the rod pushes the second apparatus in an upward direction. The first apparatus is disposed in the recess.

In one embodiment of the invention, the cutting mechanism comprises a body having a helicopter. It comprises a stopper which stops the second apparatus moving upwardly over the first apparatus moving in the cavity when it reaches a certain position. When the second apparatus reaches the position required for cutting the cable, it is fixed by means of the stopper.

In one embodiment of the invention, the cutting mechanism comprises a body having a helicopter.

The cutting mechanism for achieving the object of the present invention is shown in the accompanying figures;

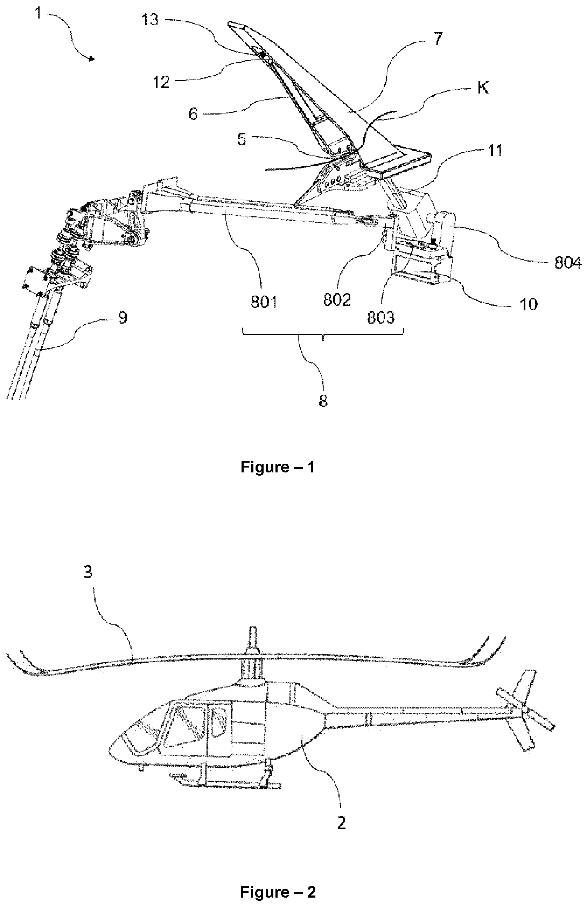

Figure 1 - Schematic view of the cutting mechanism (1).
Figure 2 - Schematic view of the body (2).

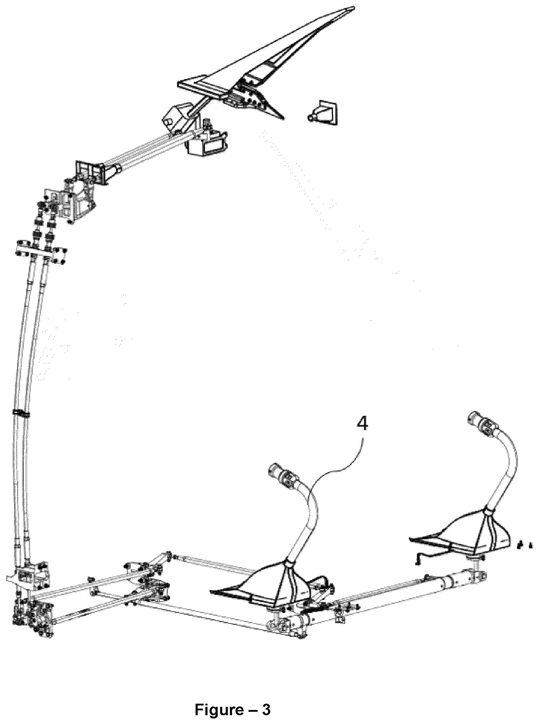

Figure 3 - Schematic view of the cutting mechanism (1).

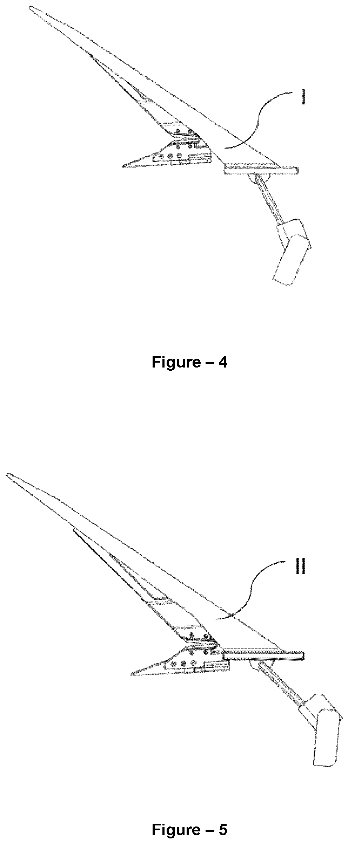

Figure 4 - Schematic view of the second apparatus (7) in closed position (I).
Figure 5 - Schematic view of the second apparatus (7) in open position (II).

The parts in the figures are numbered one by one and the corresponding numbers are given below.
1. Cutting Mechanism
2. Body
3. Blade
4. Control Rod
5. Cutter
6. First Apparatus
7. Second Apparatus
8. Movement Assembly
   801. Second Rod
   802. Intermediate Element
   803. Connecting Element
   804. Transmission Element
9. First Rod
10. Actuator
11. Rod
12. Recess
13. Stopper
   (K) Cable
   (I) Closed Position
   (II) Open Position

Cutting mechanism (1), comprises a body (2) which is an aircraft, at least one blade (3) located on the body (2), which allows the air flow to be controlled to move the body (2), at least one control rod (4) in the body (2), which allows the user to generate a cyclic motion input, thereby controlling the movement of the blade (3), at least one cutter (5) located on the body (2), which cuts a cable (K) in contact with the body (2) during movement of the body (2), preventing damage to the body (2) and/or the blade (3), at least one first apparatus (6) located on the body (2) and including a cutter (5), which guides the cable (K) towards the cutter (5), at least one second apparatus (7) located on the first apparatus (6) so as to almost completely surround the first apparatus (6), extending outwardly from the body (2) so as to guide the cable (K) to the first apparatus (6) for cutting the cable (K), thereby allowing the cable (K) to be cut by the cutter (5).

The inventive cutting mechanism (1) comprises at least one movement assembly (8) for moving the second apparatus (7) on the first apparatus (6), the second apparatus (7), which moves simultaneously with the control rod (4) when the control rod (4) is triggered by the user, thereby enabling the field of action of the cutter (5) to be changed according to the blade (3) angle predetermined by the user.

The aircraft moves by controlling the air flow through at least one blade (3) located on the body (2). The movement of this blade (3) is provided by at least one control rod (4) located in the body (2) and controlled by the cyclic motion input generated by the user. When the body (2) moves, there is a cutter (5) in contact with the cable (K), which prevents damage to the body (2) and/or the blades (3). The cutter (5) is provided in a first apparatus (6) on the body (2), which guides the cable (K) towards the cutter (5). The first apparatus (6) is surrounded by at least one second apparatus (7) extending outwardly from the body (2) for guiding the cable (K) for cutting. This mechanism ensures that the cable (K) is cut safely, reducing the risk of damage (Figure - 1).

The cutting mechanism comprises at least one movement assembly (8) for moving between the second apparatus (7) and the first apparatus (6). This movement mechanism moves simultaneously with the triggering of the control rod (4) by the user. Thus, the field of action of the cutter (5) is changed according to the angle of blade (3) predetermined by the user. This mechanism aims to ensure the safety of the aircraft by increasing the effectiveness of the cutter (5). (Figure - 2, Figure - 3)

In one embodiment of the invention, the cutting mechanism (1) comprises a closed position (I) in which the second apparatus (7) is fixedly located on the first apparatus (6) and at least partially within the body (2), an open position (II) in which the second apparatus (7) extends out of the body (2) by triggering the cutter (5) to cut the cable (K) in contact with the body (2), depending on the angle of the blade (3), The second apparatus (7), which is brought from the closed position (I) to the open position (II) by means of the movement assembly (8) when the user triggers the control rod (4), directs the cable (K) to the cutter (5) and allows the cable (K) to be cut by the cutter (5). The cutting mechanism (1) comprises a closed position (I) in which the second apparatus (7) is fixedly located on the first apparatus (6) and at least partially within the body (2). The second apparatus (7) is in an open position (II) in which, depending on the angle of the blade (3), the cutter (5) is triggered to cut the cable (K) in contact with the body (2), extending outwardly from the body (2). When the user triggers the control rod (4), the second apparatus (7) is moved from the closed position (I) to the open position (II) by means of the movement assembly (8), thereby guiding the cable (K) to the cutter (5) and allowing the cable (K) to be cut. This device aims to cut the cable (K) safely (Figure - 4, Figure - 5).

In one embodiment of the invention, the cutting mechanism (1) comprises at least one first rod (9) on the body (2), which moves the blade (3) by a user triggering the control rod (4), at least one second rod (801) having a movement assembly (8), which moves along the direction in which it extends when triggered by the first rod (9), thereby enabling movement of the second apparatus (7). The cutting mechanism (1) comprises at least one first rod (9) located on the body (2), which moves the blades (3) when the user triggers the control rod (4). This mechanism is provided with a movement assembly (8), connected to at least one second rod (801) which, when the first rod (9) is triggered, moves in the direction in which it extends. Thus, it allows movement of the second apparatus (7).

In one embodiment of the invention, the cutting mechanism (1) comprises at least one intermediate element (802) having a movement assembly (8), which translates the linear motion transmitted by the second rod (801) into cyclic motion, one end of which is connected to the second rod (801). The cutting mechanism (1) is provided with the movement assembly (8) and comprises at least one intermediate element (802) which translates the linear motion transmitted by the second rod (801) into cyclic motion. This intermediate element (802) is connected at one end to the second rod (801) and provides the transformation of the motion. Thus, the necessary cyclic motion is obtained during the operation of the system and the efficiency of the cutting mechanism (1) is increased.

In one embodiment of the invention, the cutting mechanism (1) comprises at least one actuator (10) which triggers the movement of the second apparatus (7) with the movement assembly (8), at least one connecting element (803) which is connected at one end to the intermediate element (802) and at the other end to the actuator (10), and which enables the actuator (10) to operate with the cyclic motion transmitted from the intermediate element (802). The cutting mechanism (1) comprises at least one actuator (10) which, together with the movement assembly (8), triggers the movement of the second apparatus (7). This actuator (10) is provided with at least one connecting element (803), which is connected at one end to the intermediate element (802) and at the other end to the actuator (10). Cyclic motion transmitted from the intermediate element (802) allows the actuator (10) to operate.

In one embodiment of the invention, the cutting mechanism (1) comprises at least one transmission element (804) that triggers the actuator (10) and allows movement of the second apparatus (7). The cutting mechanism (1) comprises at least one transmission element (804) which triggers the actuator (10) and allows movement of the second apparatus (7). This transmission element (804) increases the functionality of the actuator (10), effectively moving the second apparatus (7). This ensures the integrity of the system and contributes to the safe cutting of the cable (K).

In one embodiment of the invention, the cutting mechanism (1) comprises at least one rod (11) connected at one end to the transmission element (804) and at the other end to the second apparatus (7), allowing the second apparatus (7) to move linearly on the first apparatus (6). The cutting mechanism (1) comprises at least one rod (11) having one end connected to the transmission element (804) and the other end connected to the second apparatus (7). This rod (11) allows linear movement of the second apparatus (7) on the first apparatus (6).

In one embodiment of the invention, the cutting mechanism (1) comprises at least one recess (12) for positioning the second apparatus (7) on the first apparatus (6), allowing the second apparatus (7) to slide over the first apparatus (6). The cutting mechanism (1) comprises at least one recess (12) for sliding the second apparatus (7) over the first apparatus (6). The recess (12) is operable to position the second apparatus (7) on the first apparatus (6). Thus, the interaction between the first apparatus (6) and the second apparatus (7) is increased and the efficiency of the system is ensured.

In one embodiment of the invention, the cutting mechanism (1) comprises at least one stopper (13) for holding the second apparatus (7) in a position on the first apparatus (6) predetermined by the user. This stopper (13) contributes to the safe and effective operation of the system by holding the second apparatus (7) in the desired position. Thus, the cutting mechanism (1) ensures that the cable (K) is cut safely and maintains the integrity of the arrangement.

In one embodiment of the invention, the cutting mechanism (1) comprises a body (2) which is a helicopter.

## Claims

1. A cutting mechanism (1) **comprising** a body (2) which is an aircraft, at least one blade (3) located on the body (2), which allows the air flow to be controlled to move the body (2), at least one control rod (4) in the body (2), which allows the user to generate a cyclic motion input, thereby controlling the movement of the blade (3), at least one cutter (5) located on the body (2), which cuts a cable (K) in contact with the body (2) during movement of the body (2), preventing damage to the body (2) and/or the blades (3), at least one first apparatus (6) located on the body (2) and including a cutter (5), which guides the cable (K) towards the cutter (5), at least one second apparatus (7) located on the first apparatus (6) so as to almost completely surround the first apparatus (6), extending outward from the body (2) so as to guide the cable (K) into the first apparatus (6) for cutting the cable (K), thereby allowing the cable (K) to be cut by the cutter (5) **characterized by** at least one movement assembly (8) for moving the second apparatus (7) on the first apparatus (6), the second apparatus (7), which moves simultaneously with the control rod (4) when the control rod (4) is triggered by the user, thereby enabling the field of action of the cutter (5) to be changed according to the blade (3) angle predetermined by the user.

2. A cutting mechanism (1) according to claim 1, **characterized by** a closed position (I) in which the second apparatus (7) is fixedly located on the first apparatus (6) and at least partially within the body (2), an open position (II) in which the second apparatus (7) extends out of the body (2) by triggering the cutter (5) to cut the cable (K) in contact with the body (2), depending on the angle of the blade (3), the second apparatus (7), which is moved from the closed position (I) to the open position (II) by means of the movement assembly (8) by a user triggering the control rod (4), guides the cable (K) to the cutter (5) and allows the cable (K) to be cut by the cutter (5).

3. A cutting mechanism (1) according to any one of the preceding claims, **characterized by** at least one first rod (9) located on the body (2), which moves the blades (3) by the user triggering the control rod (4), at least one second rod (801) having a movement assembly (8), which moves along the direction in which it extends when triggered by the first rod (9), thereby allowing movement of the second apparatus (7).

4. A cutting mechanism (1) according to claim 3, **characterized by** at least one intermediate element (802) having the movement assembly (8) connected at one end to the second rod (801), which converts the linear motion transmitted by the second rod (801) into cyclic motion.

5. A cutting mechanism (1) according to claim 4, **characterized by** at least one actuator (10) having the movement assembly (8), which triggers the movement of the second apparatus (7), at least one connecting element (803) connected at one end to the intermediate element (802) and at the other end to the actuator (10), which allows the actuator (10) to be operated by cyclic movement transmitted from the intermediate element (802).

6. A cutting mechanism (1) according to claim 5, **characterized by at** least one transmission element (804) which triggers the actuator (10) and allows movement of the second apparatus (7).

7. A cutting mechanism (1) according to claim 6, **characterized by** at least one rod (11) connected at one end to the transmission element (804) and at the other end to the second apparatus (7), allowing the second apparatus (7) to move linearly on the first apparatus (6).

8. A cutting mechanism (1) according to any one of the preceding claims, **characterized by** at least one recess (12) allowing the second apparatus (7) to slide over the first apparatus (6), allowing the second apparatus (7) to be placed on the first apparatus (6).

9. A cutting mechanism (1) according to any one of the preceding claims, **characterized by** at least one stopper (13) to ensure that the second apparatus (7) remains stationary when it reaches the position predetermined by the user on the first apparatus (6).

10. A cutting mechanism (1) according to any one of the preceding claims, **characterized by** the body (2) being a helicopter.
